# EUROPEAN PATENT SPECIFICATION

(11) **EP 1 905 672 B1**
(45) Date of publication and mention of the grant of the patent: **25.11.2009**
(21) Application number: 07116936.1
(22) Date of filing: 21.09.2007
(51) Int. Cl.: B62D 6/10

(54) **Electric power steering system**
Elektrische Servolenkung
Système de direction assistée électrique

(30) Priority: 28.09.2006 US 847977 P; 21.08.2007 US 894432
(43) Date of publication of application: 02.04.2008
(73) Proprietor: Delphi Technologies, Inc., Troy, Michigan 48007 (US)
(72) Inventor: PATTOK, Eric David, Frankenmuth, MI 48734 (US)
(74) Representative: Denton, Michael John

(56) References cited:
- EP-A- 1 657 137
- JP-A- 2000 108 908
- JP-A- 2005 172 434
- JP-A- 2006 046 376

## Description

### TECHNICAL FIELD

The present invention relates generally to electric power steering (EPS) systems and, more particularly, to a housing used to enclose torque and position sensor elements incorporated into an electric power steering (EPS) system.

### BACKGROUND OF THE INVENTION

There is a need to measure both the torque and the angular positions of portions of a steering shaft assembly in automotive vehicles utilizing an electric power steering (EPS) system. Generally, the steering shaft assembly is formed from an input shaft and an output shaft coupled to the input shaft. The input and output shafts may be coupled by a torsion bar engaging both of the shafts. The input shaft is also connected to a steering wheel of the vehicle, and the output shaft is connected to a steering mechanism which turns the vehicle road wheels to provide a desired steer angle of the vehicle based on the degree of rotation of the input shaft by a driver of the vehicle.

Generally, in order to determine the degree of electro-mechanical assist needed to turn the road wheels of the vehicle, it is necessary to calculate the torque applied by a driver of the vehicle when the driver turns a steering wheel to rotate the input shaft. The torsion bar allows the input shaft to rotate with respect to the output shaft by a predetermined amount, and a torque sensor assembly senses the relative rotational movement between the input shaft and the output shaft. The torque sensor assembly sends a signal to an electronic controller, which then sends a control signal to a motor, initiating operation of the motor. The motor powers a gear assembly coupled to the steering mechanism. This gear assembly provides assistance in turning the vehicle road wheels.

To protect the torque sensor system from exposure to the dirt, grease, heat, and moisture encountered under the hood of the vehicle while providing proximity to the steering shaft assembly, the torque sensor assembly may be installed inside a housing containing a portion of the shaft assembly and steering mechanism. To enable installation of the sensor assembly within the housing, the housing is fabricated from two or more sections having mateable or interengaging bores formed thereon. The housing sections may be machined from, for example, aluminum castings. A first housing section contains the output shaft and a portion of the steering mechanism and a second housing section includes another bore through which the input shaft enters the housing, to transfer the torque exerted by the vehicle driver to the steering mechanism. Due to heavy loads experienced by the output shaft, two or more bearings are installed in the first housing section to support the output shaft. Another bearing (for example, a needle bearing) is also installed in the second housing section to support the input shaft. After installation of the torque sensor assembly, the housing portions are joined along mating faces thereof and sealed using a compressive seal secured by fasteners. This protects the torque sensor assembly and the other mechanical and electrical components residing in the housing.

However, because the two bearings supporting the output shaft are positioned in a different housing portion than the bearing supporting the input shaft, proper axial alignment of all three bearings is difficult to achieve. If this alignment is not achieved, the input shaft experiences a heavy constant side load, which introduces friction into the system and adversely affects the steering feel.

Also, the machining of the aluminum castings and the drilling and tapping of holes in the housing portions also adds cost to the housing fabrication and assembly process.

In addition, due to the requirement that the second housing portion have sufficient strength to retain a bearing for supporting the input shaft, the structure of the second housing portion and the material from which it is formed are relatively bulky, heavy and costly.

Furthermore, the dimensional tolerances required to retain and align the bearing in the second housing portion, the dimensional tolerances required to align this bearing with the bearings positioned in the first housing portion, and the required alignment tolerances between the input shaft bore and the bore that mates with the first housing portion all combine to restrict the materials and manufacturing processes that may be used in fabrication the second housing portion.

EP-A-1657137, JP 2005/172434 A, JP 2000/108908 A and JP 2006/046376 A each disclose a steering system in accordance with the preamble of claim 1.

### SUMMARY OF THE INVENTION

In accordance with one aspect of the present invention, an electric power steering system for a vehicle is provided which includes a shaft assembly, a torque sensor assembly in operable communication with the shaft assembly for detecting a torque applied to at least a portion of the shaft assembly, and a housing disposed around the torque sensor assembly. The shaft assembly includes a first shaft element, a second shaft element, and a torsion bar coupling the second shaft element to the first shaft element. At least one bearing is positioned between the first shaft element and the second shaft element for supporting a portion of the first shaft element within the housing.

In accordance with another aspect of the present invention, a housing for enclosing a torque sensor assembly in an electric power steering system is provided. The housing includes a first housing portion and a second housing portion secured to the first housing portion by an interference fit formed between the first and second housing portions.

### BRIEF DESCRIPTION OF THE DRAWINGS

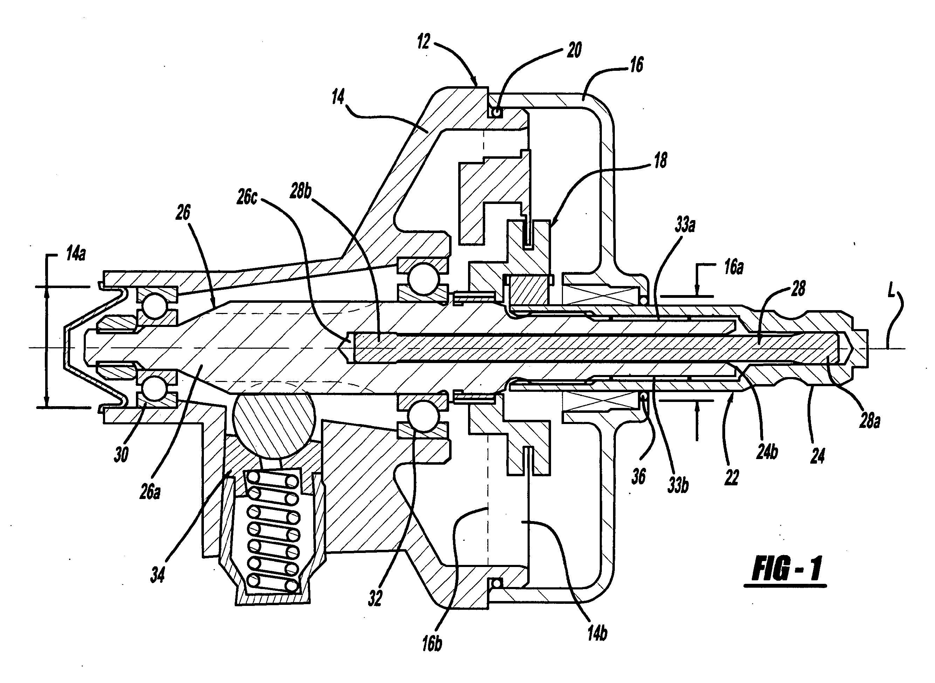

FIG. 1 is a cross-sectional side view showing one embodiment of a portion of an electric power steering system incorporating a housing in accordance with the present invention.

### DESCRIPTION OF THE PREFERRED EMBODIMENTS

FIG. 1 shows a portion of an electric power steering (EPS) system for incorporation into a motor vehicle. The EPS system includes a housing 12, a shaft assembly 22 for transferring a driver-applied torque to the road wheels (not shown) of a vehicle, and a torque sensor assembly, generally designated 18, operably coupled to the shaft assembly for sensing and measuring the driver-applied torque and generating a control signal to a motor (not shown) controlling a gear assembly (not shown) of the EPS system.

Housing 12 includes a first housing portion 14 and a second housing portion 16 secured to the first housing portion. When assembled, housing 12 is disposed around torque sensor assembly 18 to protect the torque sensor from exposure to dirt, grease, heat, and moisture encountered under the hood of the vehicle. First housing portion 14 has a first bore 14a for receiving an end 26a of a second shaft element 26 (described in greater detail below) therein, and a second, generally circular bore 14b into which portions of shaft assembly 22 and torque sensor assembly 18 are inserted during assembly. First housing portion 14 may be formed from aluminum, steel, or another metallic material by casting, machining, and/or other suitable processes.

Second housing portion 16 has a first bore 16a for receiving an end 24a of a first shaft element 24 therethrough, and a second, generally circular bore 16b adapted for engaging first housing potion 14 along first housing portion second bore 14b, to position the second housing portion with respect to the first housing portion for securement to the first housing portion. Second housing portion 16 may be formed from aluminum, steel, or another metallic material by stamping, casting, machining, and/or other suitable processes. Alternatively, the second housing portion may be molded or otherwise formed from a suitable polymer material.

In the embodiment shown in FIG. 1, second housing portion 16 is secured to first housing portion 14 by an interference fit formed between the first and second housing portions along edges of their respective bores 14b and 16b. A compression seal 20 (using an O-ring or an elastomeric gasket, for example) is formed at a junction between the first and second housing portions. Provision of generally circular mating bores 14b and 16b on first and second housing portions 14 and 16, respectively, enables radial compression of seal 20 positioned between the housing portions. This type of seal is more robust and easier to produce than a seal that resides in grooves formed in opposed mating faces of the housing portions which are pressed together along a mating axis and secured by the use of threaded fasteners. Also, the use of an interference fit between the housing portions to compress the seal and secure the housing portions together is less expensive than the use of threaded fasteners.

Shaft assembly 22 comprises first shaft element 24, second shaft element 26, and a torsion bar 28 used to couple the second shaft element to the first shaft element. In the embodiment shown in FIG. 1, first shaft element 24 is an input shaft operably coupled to a steering wheel (not shown) of a motor vehicle, and second shaft element 26 is an output shaft operably coupled (via a pinion formed thereon, for example) to a steering gear (for example, a known rack and pinion mechanism), generally designated 34. The input shaft 24, the output shaft 26 and the torsion bar 28 are disposed coaxially along an axis L. Rotation of output shaft 26 about axis L is converted in a known manner by the pinion to movement of a rack shaft of the rack and pinion mechanism (not shown) in a direction substantially perpendicular to the axis, to attain a desired steer angle of the vehicle. By this mechanism, the steering force generated when a driver operates the steering wheel is transmitted to the vehicle wheels (not shown) which are steered through input shaft 24, torsion bar 28, the output shaft 26 and the rack and pinion steering apparatus. Bearings 30 and 32 are provided in first housing portion 14 to support output shaft 26 within the housing. A known seal 36 is provided between first shaft element 24 and second housing portion 16 where the first shaft element enters the second housing portion. Seal 36 permits rotation of shaft element 24 within second housing portion first bore 16a, in a manner known in the art. Seal 36 may be selected so as to accommodate a degree of axial misalignment between the first and second shaft elements.

As seen in FIG. 1, a portion of output shaft 26 extends into an axial cavity 24b formed in input shaft 24. One or more bearings are positioned in cavity 24b between first shaft element 24 and second shaft element 26 for supporting a portion of the first shaft element within the housing. In the embodiment shown in FIG. 1, a pair of bearings 33a and 33b is positioned between shaft elements 24 and 26. Because bearings 33a and 33b are provided between the already coaxially-aligned input and output shafts to support the input shaft 24 within housing 12, there is no need to mount a bearing on second housing portion 16 to support the input shaft. Torsion bar 28 interconnects the shaft elements 24, 26 for allowing relative rotational movement between the shafts in response to a predetermined torque. Opposite ends 28a, 28b of torsion bar 28 are secured within cavities 24b, 26c formed in input shaft 24 and output shaft 26, respectively, using a splined, knurled or other type of connection as known in the art.

Torque sensor assembly 18 (shown schematically in FIG. 1) is typically located along an interface between input and output shafts 24 and 26. One type of torque sensor assembly typically used is a contacting type sensor assembly, which measures the amount of twist on the torsion bar. When the vehicle steering wheel is turned, input shaft 24 rotates and torque sensor assembly 18 measures the angular displacement of the torsion bar. The torque sensor assembly sends a signal to a controller (not shown), which then sends a signal to a motor (not shown) to begin operation. The motor powers a gear assembly (not shown) which provides assistance in turning the vehicle road wheels. Examples of torque sensor assemblies that may be incorporated into an EPS system in accordance with the present invention are described in U.S. Patent No. 6,655,493 and in U.S. Published Application No. 2006/0236784..

The housing of the present invention provides several advantages over existing designs. Because one or more bearings are provided between the input and output shafts to support the input shaft within housing 12, there is no need to mount and support a bearing on second housing portion 16 to support the input shaft. This obviates the need to axially align multiple bearings mounted in different housing portions, thereby reducing the corresponding positional tolerance requirements on the second housing portion and enabling proper alignment between the input and output shafts to be maintained at a relatively lower cost. These features reduce the cost, structural strength and dimensional tolerance requirements for the second housing portion.

In addition, the radially compressive seal formed between the housing portions of the present invention is more robust, easier to produce, and less expensive than other seal designs. Also, the use of an interference fit between the housing portions to compress the seal and secure the housing portions together is less expensive than the use of threaded fasteners.

Furthermore, the relatively compliant seal that may be formed between the input shaft and the second housing portion where the input shaft enters the second housing portion makes it easier to accommodate misalignment between the input and output shafts. In addition, the positional tolerance requirements for the bores in the second housing portion are not as severe as in existing designs, further reducing the expense of the second housing portion and of the assembly in general.

Although the principles of the present invention are described herein in terms of a housing enclosing a torque sensor assembly and gear assembly in an electric power steering system, these principles can be applied to other protective gear housings having mating input and output shaft elements extending from the housing, and/or or in instances where it is important to align shaft elements and provide a relatively low-friction bearing interface between shaft elements entering from opposite sides of a housing.

## Claims

1. An electric power steering system for a vehicle comprising:
a shaft assembly (22) including a first shaft element (24) and a second shaft element (26) disposed coaxially;
a torque sensor assembly (18) in operable communication with the shaft assembly (22) for detecting a torque applied to at least a portion of the shaft assembly (22); and
a housing (12) disposed around the torque sensor assembly (18), the housing including a first housing portion (14) and a second housing portion (16);
wherein the second shaft element (26) is supported in the first housing portion (14) by axially spaced first and second bearings (30, 32);
**characterized by** at least one bearing (33a) positioned between the first shaft element (24) and the second shaft element (26) for supporting a portion of the first shaft element (24) within the second housing portion (16) without a bearing supporting the first shaft element in the second housing portion.

2. The electric power steering system of claim 1 wherein the shaft assembly (22) further comprises a torsion bar (28) coupling the second shaft element (26) to the first shaft element (24).

3. The electric power steering system of claim 1 wherein the first housing portion (14) and the second housing portion (16) are secured together by an interference fit formed between the first and second housing portions (14, 16).

4. The electric power steering system of claim 3 wherein a compression seal (20) is formed at a junction between the first and second housing portions (14, 16).

5. The electric power steering system of claim 4 wherein compression of the seal (20) is provided by the interference fit formed between the first and second housing portions (14, 16).

6. The electric power steering system of claim 4 wherein the compression seal (20) comprises an O-ring.

7. The electric power steering system of claim 3 wherein the second housing portion (16) is formed from a polymer material.

## Patentansprüche

1. Elektrisches Servolenkungssystem für ein Fahrzeug, das aufweist:
eine Wellenanordnung (22), die ein erstes Wellenelement (24) und ein zweites Wellenelement (26) umfasst, die koaxial angeordnet sind;
eine Drehmomentsensoranordnung (18), in betriebsfähiger Verbindung mit der Wellenanordnung (22), zum Erfassen eines Drehmoments, das auf zumindest einen Teil der Wellenanordnung (22) angewendet wird; und
ein Gehäuse (12), das um die Drehmomentsensoranordnung (18) herum angeordnet ist, wobei das Gehäuse einen ersten Gehäuseteil (14) und einen zweiten Gehäuseteil (16) umfasst;
wobei das zweite Wellenelement (26) in dem ersten Gehäuseteil (14) durch axial mit Abstand vorgesehene erste und zweite Lager (30, 32) getragen wird;
**dadurch gekennzeichnet, dass** zumindest ein Lager (33a) zwischen dem ersten Wellenelement (24) und dem zweiten Wellenelement (26) positioniert ist zur Unterstützung eines Teils des ersten Wellenelements (24) in dem zweiten Gehäuseteil (16), ohne dass ein Lager das erste Wellenelement in dem zweiten Gehäuseteil trägt.

2. Elektrisches Servolenkungssystem gemäß Anspruch 1, wobei die Wellenanordnung (22) weiter aufweist eine Drehstabfeder (28), die das zweite Wellenelement (26) mit dem ersten Wellenelement (24) verbindet.

3. Elektrisches Servolenkungssystem gemäß Anspruch 1, wobei der erste Gehäuseteil (14) und der zweite Gehäuseteil (16) durch eine Presspassung, die zwischen den ersten und zweiten Gehäuseteilen (14, 16) ausgebildet ist, sicher miteinander verbunden sind.

4. Elektrisches Servolenkungssystem gemäß Anspruch 3, wobei eine Kompressionsdichtung (20) an einer Verbindungsstelle zwischen den ersten und zweiten Gehäuseteilen (14, 16) ausgebildet ist.

5. Elektrisches Servolenkungssystem gemäß Anspruch 4, wobei eine Komprimierung der Dichtung (20) durch die Presspassung vorgesehen ist, die zwischen den ersten und zweiten Gehäuseteilen (14, 16) ausgebildet ist.

6. Elektrisches Servolenkungssystem gemäß Anspruch 4, wobei die Kompressionsdichtung (20) einen O-Ring aufweist.

7. Elektrisches Servolenkungssystem gemäß Anspruch 3, wobei der zweite Gehäuseteil (16) aus einem polymeren Material ausgebildet ist.

## Revendications

1. Système de direction assistée électrique pour un véhicule, comprenant :
un ensemble à arbres (22) incluant un premier élément d'arbre (24) et un second élément d'arbre (26) disposés coaxialement ;
un ensemble à détecteur de couple (18) en communication fonctionnelle avec l'ensemble à arbres (22) pour détecter un couple appliqué à au moins une portion de l'ensemble à arbres (22) ; et
un boîtier (12) disposé autour de l'ensemble à détecteur de couple (18), le boîtier incluant une première portion de boîtier (14) et une seconde portion de boîtier (16) ;
dans lequel le second élément d'arbre (26) est supporté dans la première portion de boîtier (14) par un premier et un second palier (30, 32) axialement espacés ;
**caractérisé par** au moins un palier (33a) positionné entre le premier élément d'arbre (24) et le second élément d'arbre (26) pour supporter une portion du premier élément d'arbre (24) dans la seconde portion de boîtier (16) sans prévoir de palier supportant le premier élément d'arbre dans la seconde portion de boîtier.

2. Système de direction assistée électrique selon la revendication 1, dans lequel l'ensemble à arbres (22) comprend encore une barre de torsion (28) qui couple le second élément d'arbre (26) au premier élément d'arbre (24).

3. Système de direction assistée électrique selon la revendication 1, dans lequel la première portion de boîtier (14) et la seconde portion de boîtier (16) sont attachées ensemble au moyen d'un assemblage à interférence formé entre la première portion de boîtier et la seconde portion de boîtier (14, 16).

4. Système de direction assistée électrique selon la revendication 3, dans lequel un joint en compression (20) est formé à une jonction entre la première et la seconde portion de boîtier (14, 16).

5. Système de direction assistée électrique selon la revendication 4, dans lequel la compression du joint (20) est assurée par l'assemblage à interférence formé entre la première et la seconde portion de boîtier (14, 16).

6. Système de direction assistée électrique selon la revendication 4, dans lequel le joint en compression (20) comprend un joint torique.

7. Système de direction assistée électrique selon la revendication 3, dans lequel la seconde portion de boîtier (16) est formée en un matériau polymère.
